# EUROPÄISCHE PATENTSCHRIFT

(11) **EP 2 384 314 B1**
(45) Veröffentlichungstag und Bekanntmachung des Hinweises auf die Patenterteilung: **07.05.2014**
(21) Anmeldenummer: 10707805.7
(22) Anmeldetag: 04.01.2010
(51) Int. Cl.: C03C 11/00, C03B 19/08

(54) **VERFAHREN UND HILFSVORRICHTUNGEN ZUR HERSTELLUNG VON SCHAUMGLAS**
METHOD AND AUXILIARY DEVICE FOR PRODUCING FOAM GLASS
PROCÉDÉ ET DISPOSITIFS AUXILIAIRES POUR PRODUIRE DU VERRE CELLULAIRE

(30) Priorität: 04.01.2009 DE 102009003303
(43) Veröffentlichungstag der Anmeldung: 09.11.2011
(73) Patentinhaber: Schaumglas Global Consulting GmbH, 97299 Zell am Main (DE)
(72) Erfinder: FRAASS, Michael, 52525 Heinsberg (DE); JAQUES, Hartmut, 97299 Zell am Main (DE); STEINER, Arjen, 51109 Köln (DE)
(74) Vertreter: Weissfloh, Ingo
(86) Internationale Anmeldenummer: PCT/DE2010/000003
(87) Internationale Veröffentlichungsnummer: WO 2010/075857

(56) Entgegenhaltungen:
- DE-A1- 1 471 990
- DE-A1- 1 771 326
- JP-A- 11 268 930
- US-A- 2 191 658
- US-A- 2 303 885
- DATABASE WPI Week 197950 Thomson Scientific, London, GB; AN 1979-90640B XP002586562 -& SU 654 554 A1 (KIEV CONS MATLS IND) 30. März 1979 (1979-03-30)
- DATABASE WPI Week 197851 Thomson Scientific, London, GB; AN 1978-92592A XP002586563 -& SU 591 416 A1 (BELO CONS ARCH DES) 5. Februar 1978 (1978-02-05)

## Beschreibung

Verfahren zur Herstellung von Schaumglas, Aufgabeapparatur für die Materialaufgabe und Blähofen zur Herstellung von Schaumglas sowie Vorrichtung zum Transportieren von Schaumglasblöcken bei der Herstellung insbesondere zur Schaumglasplattenherstellung.

Es sind bereits mehrere Verfahren zur Schaumglasherstellung bekannt. Diese besitzen jedoch den Nachteil der sehr aufwändigen und nicht effizienten Umsetzung. So werden zur Herstellung von Platten Formen eingesetzt, welche mit der jeweiligen Schäummischung gefüllt werden und nach dem Blähen wieder ausgepackt werden müssen. Erst danach erfolgt das Abkühlen.

So beschreibt De 1 471 990 A1 ein Verfahren und eine Vorrichtung zum Herstellen von Glas mit Zellförmiger Struktur bei dem ein Rohgemisch aus einer Aufgabeapparatur auf ein Transportband aufgegeben wird, wobei die Aufgabehöhe über einen Abstreifer eingestellt wird. Das Rohgemisch durchläuft anschließend auf einem Bad aus geschmolzenem Metall mehrere Temperaturzonen des Blähofens sowie eine Vorkühlung in einem Stabilisierungsbereich bevor das gebildete Schaumglas in den Kühlofen gelangt.

Die JP 11268930 A beschreibt ein Verfahren zur Produktion von Schaumglas bei dem die Partikelgröße kontrolliert wird. Bei dem Verfahren wird unter anderem eine Kontrolle und eine Einstellung der Aufgabehöhe des Rohgemisches durchgeführt.

Die SU 654554 und die US 2 303 885A beschreiben die Herstellung von Schaumglas, wobei für eine gleichmäßige Rohgemischverteilung Vibrationselemente eingesetzt werden.

In der SU 591416 A1 wird eine Vorrichtung Offenbart welche mittels Igelbändern Schaumglasblöcke transportiert.

Die CH 637 606 A5 beschreibt ein Verfahren zur Schaumglas-Granulat-Herstellung. Das Schaumglas-Granulat besteht aus Bruchstücken eines Schaumglas-Körpers und weist pro cm3 mindestens 10⁵, vorzugsweise mindestens 10⁶ Bläschen von mindestens angenähert gleicher Größe auf. Es wird erhalten indem man die Rohmaterialien zu einem Mehl vermahlt, dieses mit einem in der Wärme Gas entwickelnden Blähmittel vermischt, das Gemisch in einem Flachbettofen zu einem flachen Schaumglas-Strang bläht, diesen nach dem Blähen abkühlt und unmittelbar nach dem Abkühlen zu Granulat zerkleinert.

Weiterhin wird in der CH 688 549 A5 ein Verfahren zur Herstellung von Formkörpern aus Glasschaum beschrieben. Dieses Verfahren zur Herstellung von Formkörpern aus Glasschaum, wobei diese Formkörper eine weitgehend geschlossene Außenhaut haben, ist dadurch gekennzeichnet, dass man in einem ersten Schritt Glasmehl mit der jeweils gewünschten Zusammensetzung der Siebfeinheit, wenigstens ein Blähmittel, welches unter Wärmeeinwirkung wenigstens ein treibendes Gas freisetzt, und wenigstens ein Bindemittel zu einem homogenen und kompaktierbaren Gemenge vermischt, dann in einem zweiten Schritt entweder dieses homogene und kompaktierbare Gemenge unter Wärmeeinwirkung zu Glasschaum aufbläht und das so geblähte Material im noch heißen, zähflüssigen Zustand unter Druckeinwirkung in die gewünschte Form und Größe bringt, wobei diese Druckeinwirkung wenigstens so lange erfolgt, bis die Oberfläche des Glasschaums bei entsprechender Abkühlung soweit erstarrt ist, dass sich der Glasschaum von selbst nicht mehr deformiert, oder dass genannte homogene und kompaktierbare Gemenge zum jeweils gewünschten Rohkörper formt und kompaktiert, diesen geformten und kompaktierten Rohkörper unter Wärmeeinwirkung zu Glasschaum aufbläht, und in einem dritten Schritt das erhaltene geblähte Material derart abkühlt, dass im geblähten Endprodukt keine Spannungsrisse entstehen.

In der DE 177 14 15 A1 wird ein Verfahren zum Herstellen von Leichtbaustoffen und -zuschlagstoffen aus vulkanischen Tuffen beschrieben, bei welchem fein- oder feinstkörniges Ausgangsmaterial, wie Tuffstaub oder -schlamm, zunächst zu Zwischenkörpern, wie einem Granulat oder sonstigen Formkörpern, vorgeformt wird und dass diese zunächst auf etwa 400 bis 500° C erwärmt und anschließend im Beisein von Kohlenstoff innerhalb kurzer Zeit auf eine Temperatur von 800 bis 1150° C erhitzt und zum fertigen Schaumkörper aufgeschäumt werden, wobei durch Zugabe eines Trennmittels ein Verkleben der pyroplastischen Körper miteinander verhindert wird.

Die AT 259 783 B beschreibt ein Verfahren zur Herstellung von Schaumglas, wobei ein verschäumbares, aus einer feinteiligen Glassubstanz und Blähstoff(en) gebildetes Gemenge auf die zur Verschäumung erforderliche Temperatur erhitzt und danach abgekühlt wird, dadurch gekennzeichnet, dass aus dem vorzugsweise unter Zusatz eines kolloidalen Pulvers, z. B. von Tonerde, Kaolin, Talk oder dergleichen hergestellten Gemenge und einem bei den Erhitzungstemperaturen nicht schmelzenden Stoff ein sandwichartiger platten-, tafel- bzw. strangförmiger Schichtkörper gebildet und mit der nichtschmelzenden Schicht als Auflagefläche durch den Erhitzungsbereich geführt wird.

Weiterhin beschreibt die AT 234 938 B ein Verfahren zur Herstellung von wärmeisolierenden Platten oder Scheiben aus Schaumglas, bei welchem das zuerst in an sich bekannter

Weise Schaumglasstücke kleinerer Größe hergestellt werden und dann eine Schicht von gewünschter Dicke dicht aneinanderliegender Stücke auf einer Transporteinrichtung erhitzt wird, so dass dabei eine Erweichung der Glasstücke bzw. deren Oberflächenschicht erzielt wird, wonach die derart erhitzte Schicht zwecks Zusammenklebens der Kugeln zu einer fortlaufenden Bahn einer Pressung unterworfen wird.

In der DE 195 36 666 C2 wird ein Verfahren zur Schaumglasherstellung unter Verwendung bekannter Grundstoffe und gasbildender Stoffe beschrieben, bei welchem die zur Herstellung von Schaumglas eingesetzten bekannten Grundstoffe wie Glaspulver und/oder Glasstücke, Mineralien, Mischsilikate, Glasbildner und anderes aufzuschäumendes Material gebrochen oder pulverisiert einem Extruder zugegeben werden und in diesem mit den ebenfalls in den Extruder eingegebenen Treibmitteln unter Zuführung einer zusätzlichen Wärme, welche in Addition mit der durch die Scherkräfte sowie durch Aneinanderreihen und Kneten des eingesetzten Materials entstehenden Reibungswärme die Temperatur bildet, welche zum Erreichen der Umwandlung von Glaspulver und/oder Glasstücken, Mineralien, Mischsilikaten, Glasbildnern und anderen aufzuschäumenden Materialien zur Glasschmelze nötig ist, geschmolzen wird, und nach vollständiger Vermischung und Aufschmelzung der Komponenten die aufgeschäumte Glasschmelze und/oder das Schaumglas einer Form oder einem Transportband mit Zurichtungen aufgegeben wird.

Schließlich beschreibt die DE 302 27 87 A1 ein Verfahren zur kontinuierlichen Herstellung von Schaumglas bei dem Glaspulver und Blähmittel auf Kohlenstoffbasis erhitzt werden und mit einer bestimmten Zusatzstoffrezeptur durch Trocknen und/oder durch andere Bindung ganz oder teilweise verfestigt wird, während eines Zeitraums von mindestens 10 Minuten stehengelassen wird und danach die verfestigte Mischung granuliert und die granulierte glasige Masse schichtförmig auf ein Transportband aus hitzebeständigem Material, wie Draht oder dergleichen, auf das zuvor ein Trennmittel, das ein Festkleben der glasigen Masse auf diesem verhindert, aufgebracht worden ist, verteilt wird, und dass die glasige Masse sodann auf dem Transportband durch einen Ofen geführt wird, in dem die glasige Masse aufgeschmolzen, aufgebläht und anschließend zumindest teilweise abgekühlt wird.

Aufgabe der Erfindung ist es ein Verfahren, eine Aufgabeapparatur für die Materialaufgabe und ein Blähofen zur Herstellung von Schaumglas sowie eine Vorrichtung zum Transportieren von Schaumglasblöcken während des Herstellungsprozesses zu schaffen.

Mit der Erfindung wird im angegebenen Anwendungsfall erreicht, dass ein Verfahren und mehrere Hilfsvorrichtungen geschaffen werden, wobei eine hohe Materialausbeute und einer Hoher Grad der Automatisierung erreicht werden. Durch das Glasvliesband und den Abstreifer können Platten mit unterschiedlicher Länge und mit jeweils unterschiedlich einstellbarer Höhe über die Breite des Glasvliesbandes produziert werden. Durch das erfindungsgemäße Verfahren wird die Produktion vereinfacht und beschleunigt, da zusätzlich Befüllschritte und Auspackschritte von Formen entfallen. Das notwendige energieaufwändige Mitheizen von Formen entfällt, ebenso das langwierige Abkühlen der Formen. Der gesamte Prozess wird dadurch kostengünstiger und kann in kürzeren Zeiten ablaufen. Die aufwändige Bearbeitung des Glasschaums unmittelbar nach dem Blähofen ist durch die Bildung von Segmenten nicht mehr notwenig. Die Kühlung der Segmente erfolgt erfindungsgemäß in einen komplett automatisierten Arbeitsgang. Hierbei werden die vorgekühlten Segmente durch eine Aufstellvorrichtung senkrecht gestellt. Mit der Vorkühlung erhalten die Segmente die dafür notwendige äußerliche feste Struktur. Durch die automatisierte Nachbearbeitung der abgekühlten Platten oder Blöcke können nahezu beliebige Formen gefertigt werden, ohne dass spezielle Formen oder formende Verfahrenschritte des Rohgemisches erfolgen müssen.

Vorteilhafte Ausgestaltungen der Erfindung sind in den Ansprüchen 2 bis 15 dargestellt.

Das Verfahren erfährt nach Anspruch 2 eine Weiterbildung, indem in einem Schritt 4 die aufgeschäumten und abgekühlten Segmente einer Nachbearbeitung zugeführt werden, wodurch die Segmente die gewünschte Form und Größe erhalten.

Mit der Weiterbildung nach Anspruch 3 werden in einem Schritt 5 die nachbearbeiteten Segmente logistisch nachbearbeitet, wodurch diese lagerfähig, versandfähig und versandfertig werden

Die Weiterbildung nach Anspruch 4 gilt einer Erweiterung des Verfahrensschrittes 5, indem zusätzliche Schutzvorrichtungen um und an die Segmente abgeordnet werden, wodurch diese gegen mechanische Beeinflussung geschützt werden.

Bei der Weiterbildung nach Anspruch 5 wird zur Vermeidung von Endlosbändern und zur Bildung unterschiedlich großer und/oder langer Segmente ein Abstreifer gesenkt und gehoben. Zusätzlich kann die Aufgabehöhe des Rohgemisches für die zu erwartende Höhe des aufgeblähten Segmentes äußerst genau eingestellt werden. Je nach Aufgabehöhe können so unterschiedlich große Abstände zwischen den einzelnen Segmenten eingestellt werden.

Nach Anspruch 6 wird am Abstreifer ein Vibrationselement zugeschaltet oder abgeschaltet, wodurch das Rohgemisch auf dem Glasvlies besser homogenisiert wird und somit auf unterschiedliche Glasmehlqualitäten und Qualitätsanforderungen an das Endprodukt eingegangen werden kann.

Bei der Weiterbildung nach Anspruch 7 werden zur Reduzierung der Kühlofenlänge und zur gleichzeitig höheren Ausbeute die aufgeschäumten oder aufgeblähten Segmente hochkant parallel nebeneinander in den Kühlofen eingeführt.

Nach Anspruch 8 erfolgt zur Qualitätssicherung die Abkühlung der Segmente im Kühlofen definiert spannungsfrei.

Nach Anspruch 9 verbleibt das Glasvliesband an der Unterseite der Segmente. Durch die dadurch entstehende definierte Fläche lassen sich die Blöcke oder Platten später über geeignete Verfahren an entsprechenden Flächen befestigen oder montieren. In der Nachbearbeitung reduzieren sich die nachzubearbeitenden Seiten.

Bei der Weiterbildung nach Anspruch 10 als Nebenanspruch besitzt die Aufgabeapparatur einen Abstreifer mit einem Vibrationselement. Hierdurch wird die Trennung der Segmente erreicht und das Rohgemisch zur Qualitätserreichung auf dem Glasvlies besser homogenisiert aufgebracht.

Die Höhenjustiereinrichtung und/oder Neigungsjustiereinrichtung am Abstreifer nach Anspruch 11 dient der anforderungsgenauen Trennung der Segmente aus Rohgemisch und zur anforderungsgenauen Einstellung der Aufgabehöhe des Rohgemisches.

Die besondere Bauform des Blähofens nach Anspruch 12 als Nebenanspruch ermöglicht einen effizienten Energieeinsatz. Durch eine Zirkulation der zugeführten thermischen Energie erfolgt eine gleichmäßige Temperierung des auszuschäumenden bzw. aufzublähenden Segmentes.

Nach Anspruch 13 wird das Glasvliesband über eine Gliederkette in den Blähofen eingezogen, wodurch das Rohgemisch auf einer gleich bleibend ebenen Oberfläche durch den Blähofen gezogen und transportiert wird und nach dem Blähen und Vorkühlen problemlos wieder entnommen werden kann.

Die Igelbänder und/oder der Roboter an der Aufstellvorrichtung nach Anspruch 14 gewährleisten ein zuverlässiges Greifen der Segmente an der schon harten Außenschale ohne dabei die noch instabile Innenstruktur zu gefährden.

Mehrere Ausführungsbeispiele der Erfindung sind in den Zeichnungen dargestellt und werden im Folgenden näher beschrieben. Es zeigen:
Fig. 1 eine schematische Darstellung der Rohgemischaufgabe und der Segmentbildung,
Fig. 2 eine schematische Darstellung einer Blähofenstrecke mit unterschiedlichen Heizzonen und einem Stabilisierungsbereich am Ende der Heizzonenstrecke des Blähofens,
Fig. 3 eine schematische Darstellung eines Blähofens in Schnittdarstellung ,
Fig. 4 eine schematische Darstellung der Luftströmung in einem Kühlofen mit Temperaturverlauf,
Fig. 5 eine schematische Darstellung der Abkühlung mit Kühlofen,
Fig. 6 eine schematische Darstellung des Nachbearbeitungsprozesses.

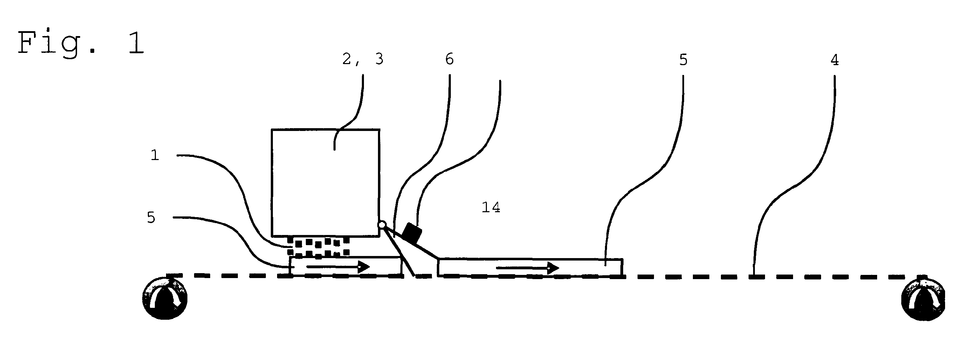

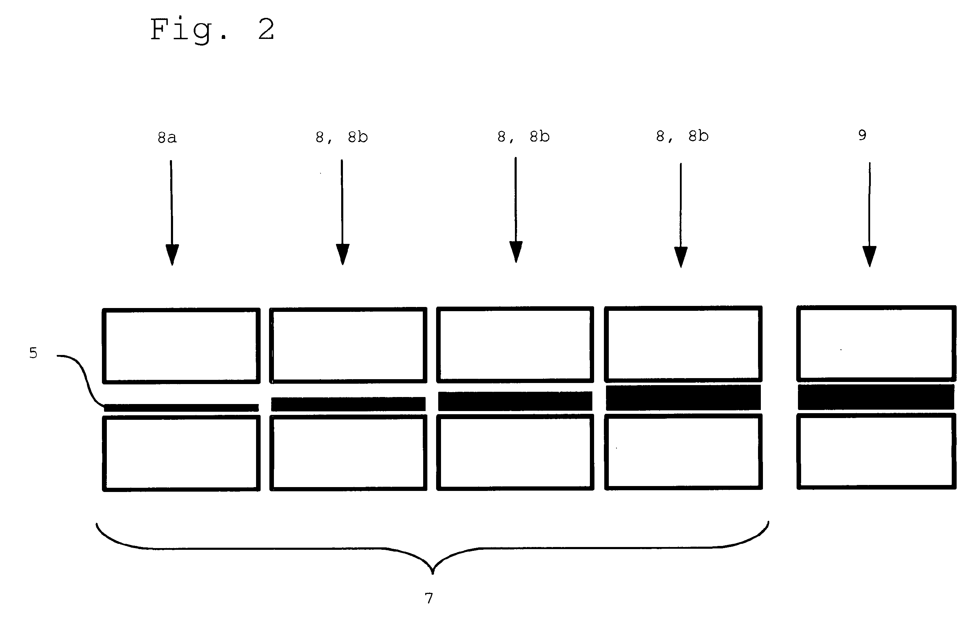

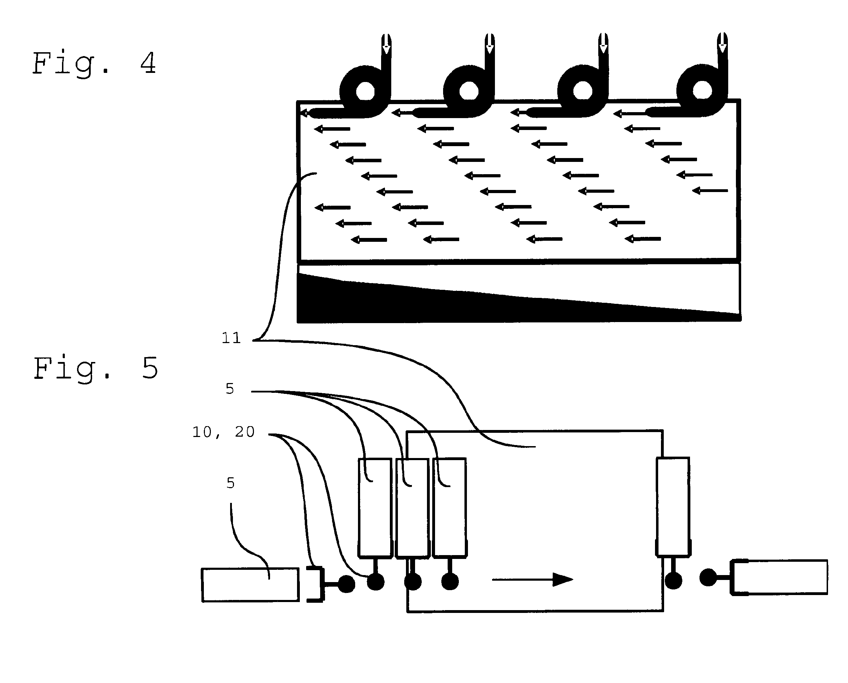

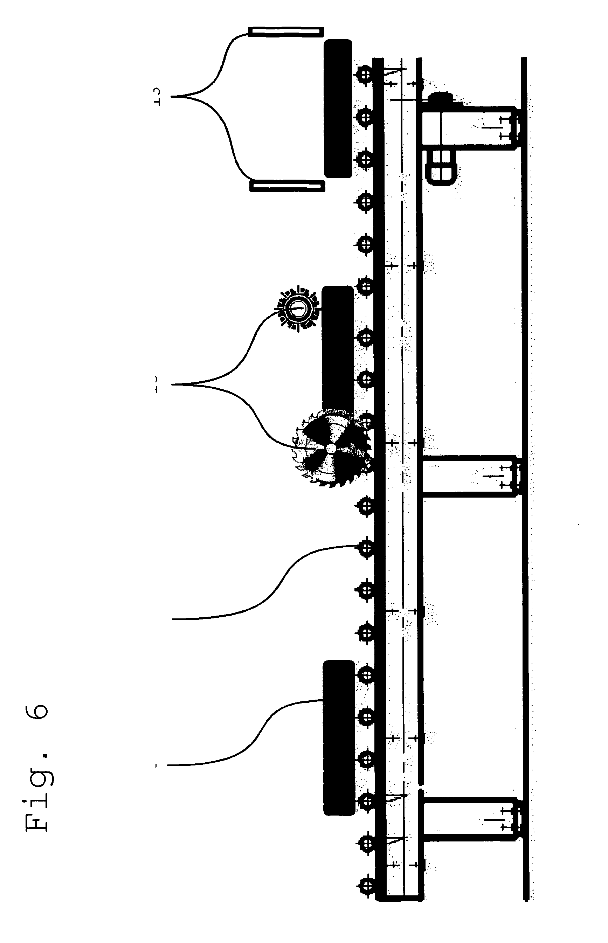

Das erfindungsgemäße Verfahren wird durch die einzelnen Verfahrenschritte umgesetzt. Dabei wird in einem Schritt 1, wie in Figur 1 schematisch dargestellt, eine bekannte und homogen vermengte Rezeptur als Rohgemisch 1 auf ein Glasvliesband 4 aufgetragen, welches auf einer umlaufenden Gliederkette aufliegt. Das Auftragen des Rohgemisches 1 geschieht über eine Aufgabeapparatur 3 mit gleichmäßiger Bürstenaufgabe. Die Bürste bewirkt dabei eine gleichmäßige Materialaufgabe über die gesamte Auftragsbreite. Die Unterteilung des Rohgemisches 1 in Segmente 5 wird durch einen Abstreifer 6 umgesetzt. Über den Abstreifer 6 wird die Aufgabehöhe des Rohgemisches 1 auf den Millimeter genau eingestellt. Dafür wird der Abstreifer 6 entsprechend gehoben und gesenkt. Ebenso erfolgt das entsprechend gesteuertes Senken und Heben für die Trennung der Segmente 5 zur Vermeidung von Endlosbändern. Je nach Aufgabenhöhe werden die Abstände der Segmente 5 länger oder kürzer gewählt. Der Abstreifer 6 besitzt dafür eine gesteuerte Höhenjustiereinrichtung. Das Rohgemisch 1 wird über die gesamte Breite des Glasbandvlieses 4 aufgetragen. Zur besseren Homogenisierung des Rohgemisches 1 auf dem Glasvliesband 4 befinden sich am Abstreifer 6 Vibrationselemente 14. Diese können je nach Bedarfsfall zugeschaltet werden. Hierdurch lässt sich individuell auf qualitative Anforderungen eingehen. Im zweiten erfindungsgemäßen Schritt, wie in Figur 2 schematisch dargestellt, werden die Segmente 5 auf dem Glasbandvlies 4 in den Blähofen 7 transportiert. Hier durchlaufen die Segmente 5 mehrere nacheinander angeordnete Heizzonen 8. Nach einem Einzugsbereich 8a werden Aufschäumbereiche 8b durchlaufen. Im Schritt 3, wie in Figur 4 und 5 dargestellt, erfolgt am Ende des Blähofens 7 nach dem letzten Aufschäumbereich 8b eine Vorkühlung in einem Stabilisierungsbereich 9 zur Härtung der äußeren Schicht. Das Glasvliesband 4 verbleibt nach dem Schäumprozess an den Segmenten 5 und später nach der Nachbearbeitung 13 je nach Bedarfsfall an den fertigen Blöcken oder Platten. Diese Fläche kann zur Befestigung der Platten an Hausfassaden durch spezielle Kleber verwendet werden. Über eine Aufstellvorrichtung 20 am Ende des Stabilisierungsbereiches 9 werden die liegenden Segmente 5 senkrecht in einen Querschlitten 10 aufgestellt und über diesen Querschlitten 10 in einen Kühlofen 11 eingeführt. Die Segmente 5 durchlaufen den Kühlofen 11 parallel angeordnet. Hierdurch wird die Länge des Kühlkofens 11 minimiert. Im Kühlofen 11 werden die Segmente 5 definiert spannungsfrei abgekühlt. In einem Schritt 4, wie in Figur 6 dargestellt, werden nach dem Kühlofen 11 die Segmente 5 einer Nachbearbeitung 13 zugeführt. Hier werden die Segmente 5 durch Fräsen oder Schneiden in die gewünschte Form gebracht. Dabei ist ein einfaches Beschneiden und flächiges Fräsen ebenso möglich wie eine dreidimensionale Bearbeitung. Der Nachbearbeitung 13 folgt in einem Schritt 5 die logistische Bearbeitung der fertigen Segmente 5. Hierbei werden die nachgearbeiteten Segmente 5 auf Paletten gestapelt und versandfertig verpackt. Zum besonderen Schutz vor mechanischen Einflüssen werden die Segmente 5 im Bedarfsfall durch entsprechende Schutzvorrichtungen ergänzt. Die Schritte 1 bis 5 verlaufen vollständig automatisiert als Online-Verfahren. Das personelle Eingreifen wird auf ein sehr geringes Maß reduziert.

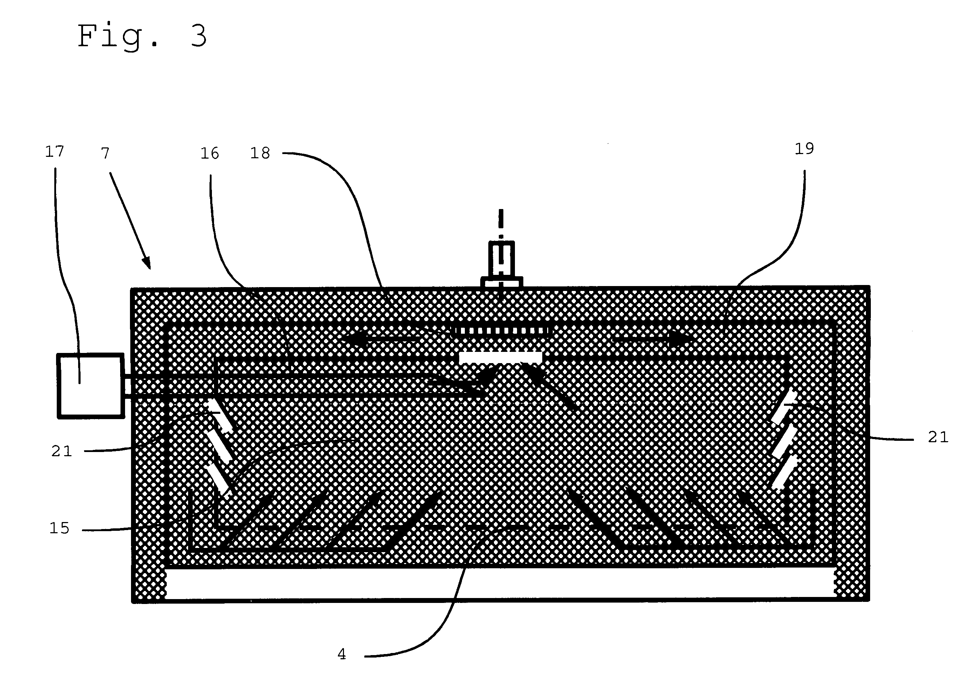

Der Blähofen 7 ist schematisch in Fig. 3 dargestellt. Es besteht im Querschnitt im Wesentlichen aus einem rechteckiger Brennraum 15. Der Brennraum 15 besitzt die Form einer Innenhaube mit einer offenen Unterseite. An den Längsseiten im oberen Bereich ragen in den Brennraum Brennerrohre 16 und/oder Brennerdüsen 16. Diese Brennerrohre 16 besitzen eine zur Oberseite weisende, abgeschrägte, gebogene und/oder gekrümmte Auslassöffnung. Der Brenner 17 ist im konkreten Beispiel innerhalb des Blähofens 7 angeordnet ist. An der Oberseite des Brennraumes 15 ist mittig eine Öffnung angeordnet. Diese Öffnung bietet einen Zugang und einen Durchlass zu einem den Brennraum 15 umgebenden Strömungskanal 19. Über der Öffnung im Brennraum ist ein Umsetzer 18 in Form eines Flügelrades und/oder Schaufelrades angeordnet. Der Strömungskanal 19 weist seitlich in den Innenraum des Blähofens 7 führende Öffnungen 21 in Form von Kiemen auf. Für die Energieeffizienz ist der Strömungskanal 19 allseitig von einer den Blähofen 7 begrenzenden und isolierenden Wandung umgeben. Der Brennraum 15 ist auf der Unterseite durch das Glasvliesband 4 begrenzt.

An einer Aufstellvorrichtung 20 am Ende des Stabilisierungsbereiches 9 sind Greifelemente vorzugsweise in Form von Igelbänder und/oder Roboter vorhanden. Die Greifelemente an der Aufstellvorrichtung 20 Greifen die Segmente 5 und stellen diese senkrecht.

### Zusammenstellung der Bezugszeichen

- 1: - Rohgemisch
- 2: - Mischbehälter
- 3: - Aufgabeapparatur
- 4: - Glasvliesband, Glasvliessegment
- 5: - Segment
- 6: - Abstreifer
- 7: - Blähofen
- 8: - Heizzone
- 8a: - Einzugsbereich
- 8b: - Aufschäumbereich
- 9: - Stabilisierungsbereich
- 10: - Querschlitten
- 11: - Kühlofen
- 12: - Fördereinrichtung
- 13: - Nachbearbeitung
- 14: - Vibrationselement
- 15: - Brennraum
- 16: - Brennerrohr, Brennerdüse
- 17: - Brenner
- 18: - Umsetzer
- 19: - Strömungskanal
- 20: - Aufstellvorrichtung
- 21: - Öffnung

## Patentansprüche

1. Verfahren zur Herstellung von Schaumglas, wobei ein homogen vermengtes Gemisch nach bekannter Rezeptur dem Verarbeitungsprozess zugeführt, zum Aufschäumen erhitzt und anschließend abgekühlt wird,
**dadurch gekennzeichnet,**
- **dass** in einem Schritt 1 ein Rohgemisch (1) aus einem Mischbehälter (2) über eine Aufgabeapparatur (3) mit gleichmäßiger Bürstenaufgabe auf ein Glasvliesband (4) und/oder Glasvliessegment (4), welches vorher auf einer umlaufenden Gliederkette aufgelegt wird, aufgetragen wird, wobei das Rohgemisch (1) in Segmente (5) in Form von Rohblöcken und/oder Rohplatten über die gesamte Breite des Glasvliesbandes (4) und/oder Glasvliessegmentes (4) aufgetragen wird und über einen Abstreifer (6) die Aufgabehöhe eingestellt wird,
- **dass** in einem Schritt 2 die Segmente (5) auf dem Glasvliesband (4) und/oder Glasvliessegment (4) in den Blähofen (7) gelangen und verschiedene Heizzonen (8) durchlaufen, wobei die Segmente (5) nacheinander ein Einzugsbereich (8a) und mindestens einen Aufschäumbereich (8b) durchlaufen,
- **dass** in einem Schritt 3 am Ende des Blähofens (7) eine Vorkühlung in einem Stabilisierungsbereich (9) erfolgt und die auslaufenden Segmente (5) durch eine
Aufstellvorrichtung (20) senkrecht auf einen Querschlitten (10) gekippt und in einen Kühlofen (11) eingeführt werden, wobei die Aufstellvorrichtung (20) in die Oberfläche der Segmente (5) einhakt und/oder diese umgreift und die Segmente (5) auf die Querschlitten (10) positioniert.

2. Verfahren nach einem der vorhergehenden Ansprüche,
**dadurch gekennzeichnet,**
**dass** in einem Schritt 4 am Ende des Kühlofens (11) die Segmente (5) wieder waagerecht auf eine Fördereinrichtung (12) gekippt und einer Nachbearbeitung (13) in Form von an sich bekannten Schneidvorrichtungen und/oder Fräsvorrichtungen zugeführt werden, wobei eine horizontale, eine vertikale und/oder eine beliebige dreidimensionale Nachbearbeitung (13) erfolgt.

3. Verfahren nach einem der vorhergehenden Ansprüche,
**dadurch gekennzeichnet,**
**dass** in einem Schritt 5 die nachgearbeiteten Segmente (5) über eine Stapeleinrichtung auf Paletten und/oder auf Lagerplätze gestapelt und mit Stretchfolie geschützt eingepackt werden.

4. Verfahren nach einem der vorhergehenden Ansprüche,
**dadurch gekennzeichnet,**
**dass** im Schritt 5 zusätzlich die Kanten der Segmente (5) durch einen Kantenschutz geschützt werden.

5. Verfahren nach einem der vorhergehenden Ansprüche,
**dadurch gekennzeichnet,**
**dass** durch das Aussetzen des Auftragens des Rohgemisches (1) und durch Senken und Heben des Abstreifers (6) in Schritt 1 die Segmente (5) gebildet werden.

6. Verfahren nach einem der vorhergehenden Ansprüche,
**dadurch gekennzeichnet,**
**dass** im Schritt 1 am Abstreifer (6) ein Vibrationselement (14) zugeschaltet wird.

7. Verfahren nach einem der vorhergehenden Ansprüche,
**dadurch gekennzeichnet,**
**dass** im Schritt 3 die Segmente (5) parallel nebeneinander gesetzt in den Kühlofen (11) eingeführt werden.

8. Verfahren nach einem der vorhergehenden Ansprüche,
**dadurch gekennzeichnet,**
**dass** die Abkühlung im Kühlofen (11) in Schritt 3 definiert spannungsfrei erfolgt.

9. Verfahren nach einem der vorhergehenden Ansprüche,
**dadurch gekennzeichnet,**
**dass** das Glasvliesband (4) und/oder das Glasvliessegment (4) an der Unterseite der Segmente (5) oder des Endlosbandes (22) verbleibt und im Schritt 3 das Glasvliesband (4) zwischen den einzelnen Segmenten (5) getrennt wird.

10. Aufgabeapparatur für die Materialaufgabe zur Herstellung von Schaumglas,
**dadurch gekennzeichnet,**
**dass** am Ende der Aufgabeapparatur (3) in Arbeitsrichtung einer Gliederkette mit einem Glasvlies ein Abstreifer (6) in Form einer Klappe und/oder eines Kammes mit einem Vibrationselement (14) angeordnet ist.

11. Aufgabeapparatur nach Anspruch 10,
**dadurch gekennzeichnet,**
**dass** der Abstreifer (6) eine Höhenjustiereinrichtung und/oder eine Neigungsjustiereinrichtung besitzt, wobei an den Justiereinrichtungen Steuerungen vorhanden sind.

12. Blähofen zur Herstellung von Schaumglas,
**dadurch gekennzeichnet,**
**dass** ein im Querschnitt im Wesentlichen rechteckiger Brennraum (15) in Form einer Innenhaube mit einer offenen Unterseite vorhanden ist und dass an mindestens einer der senkrechten Längsseiten in den Brennraum hineinragende Brennerrohre (16) und/oder Brennerdüsen (16) vorhanden sind, wobei diese eine zur Oberseite weisende, abgeschrägte, gebogene und/oder gekrümmte Auslassöffnung besitzen und der Brenner (17) innerhalb und/oder außerhalb des Blähofens (7) angeordnet ist und dass an der Oberseite mittig angeordnet eine Öffnung zu einem den Brennraum (15) umgebenden Strömungskanal (19) vorhanden ist, wobei über der Öffnung ein Umsetzer (18) in Form eines Flügelrades und/oder eines Schaufelrades angeordnet ist und der Strömungskanal (19) seitlich in den Innenraum des Blähofens (7) führende Öffnungen (21) in Form von Kiemen aufweist und dass der Strömungskanal (19) allseitig von einer den Blähofen (7) begrenzenden und isolierenden Wandung umgeben ist und dass der Brennraum (15) auf der Unterseite durch ein Glasvliesband (4) begrenzt ist.

13. Blähofen nach Anspruch 12,
**dadurch gekennzeichnet,**
**dass** das Glasvliesband (4) über eine Gliederkette entlang der Aufgabeapparatur (3) und/oder in den Blähofen (7) einziehbar ist.

14. Vorrichtung zum Transportieren von Schaumglasblöcken bei der Herstellung von Schaumglas,
**dadurch gekennzeichnet,**
**dass** an einer Aufstellvorrichtung (20) am Ende eines Stabilisierungsbereiches (9) und einer Gliederkette mit einem Glasvlies Greifelemente in Form von Igelbändern und/oder Robotern vorhanden sind.

## Claims

1. Method for producing foamed glass, whereby a homogenously mixed mixture according to a known recipe is supplied to the processing process, heating for foaming and then cooled,
**characterized in that**
- in step 1, a raw mixture (1) is supplied from a mixture container (2) via an application apparatus (3) and applied with consistent brush strokes to a glass fleece strip (4) and / or glass fleece segment (4), which is already positioned on a circulating linked chain, whereby the raw mixture (1) is divided into segments (5) in the form of blocks and / or plates across the entire width of the glass fleece strip (4) and / or glass fleece segment (4) and the supply height is adjusted using a wiper (6),
- in step 2 the segments (5) on the glass fleece strip (4) and / or glass fleece segment (4) pass through the expansion oven (7) and various heat zones (8), whereby the segments (5) consecutively pass through an entrance area (8a) and at least one foaming area (8b),
- in step 3 at the end of the expansion oven (7) there is pre-cooling in a stabilization area (9) and the exiting segments (5) are tipped into a vertical position by a positioning device (20) onto a cross slide (10) and are then transported into an annealing lehr (11), whereby the positioning device (20) hooks into and / or grips the surface of the segments (5) and positions the segments (5) on the cross slides (10).

2. Method according to Claim 1,
**characterized in that**
in step 4 at the end of the annealing lehr (11) the segments (5) are repositioned horizontally on a conveyor device (12) and transported to post-processing (13) in the form of known cutting devices and / or milling devices, whereby a horizontal, vertical and / or any three-dimensional post-processing (13) is performed.

3. Method according to any of the above claims,
**characterized in that**
in step 5 the post-processed segments (5) are stacked on pallets and / or in storage space using a stacker and are protectively packaged in stretch film.

4. Method according to any of the above claims,
**characterized in that**
in step 5, the edges of the segments (5) are additionally protected with edge protectors.

5. Method according to any of the above claims,
**characterized in that**
as a result of interrupted application of the raw mixture (1) and by lowering and raising the wiper (6), the segments (5) in step 1 are formed.

6. Method according to any of the above claims,
**characterized in that**
in step 1 the wiper (6) is fitted with a vibration element (14).

7. Method according to any of the above claims,
**characterized in that**
in step 3 the segments (5) are positioned parallel to each other in the annealing lehr (11).

8. Method according to any of the above claims,
**characterized in that**
the cooling in step 3 is a defined unstressed process.

9. Method according to any of the above claims,
**characterized in that**
the glass fleece strip (4) and / or the glass fleece segment (4) remains on the bottom of the segments (5) and in step 3 the glass fleece strip (4) is separated between the individual segments (5).

10. Application apparatus for applying the material for producing foamed glass,
**characterized in that**
at the end of the supply arrangement (3) in the working direction of the linked chain with a glass fleece there is a wiper (6) in the form of a shutter and / or comb with a vibration element (14).

11. Application apparatus according to Claim 10,
**characterized in that**
the wiper (6) has a height positioning device and / or angle positioning device, with controls for the positioning devices.

12. Expansion oven for producing foamed glass,
**characterized in that**
there is a combustion chamber (15) with a largely rectangular cross section in the form of an inner hood with an open bottom and that at least one of the vertical long sides in the combustion chamber has burner pipes (16) and / or burner nozzles (16), these having a beveled, bent and/or curved outlet facing to the top and the burner (17) being located inside and / or outside the expansion oven (7) and that there is an opening in the middle of the top of the combustion chamber (15) to the surrounding flow channel (19), whereby a converter (18) in the form of an impeller and / or blade wheel is fitted and the flow channel (19) has an opening (21) to the side of the interior of the expansion oven (7) in the form of gills and that the flow channel (19) is surrounded on all sides by a wall separating it and insulating it from the expansion oven (7) and that the combustion chamber (15) is separated at the bottom by a glass fleece strip (4).

13. Expansion oven according to Claim 12,
**characterized in that**
the glass fleece strip (4) can be fed via a linked chain along the application apparatus (3) and / or into the expansion oven (7).

14. Device for transporting foamed glass blocks when producing foamed glass,
**characterized in that**
gripper elements in form of hedgehogs and / or robots are fitted to a positioning device (20) at the end of the stabilization area (9) and at the end of the linked chain with a glass fleece.

## Revendications

1. Procédé visant la fabrication de verre cellulaire, consistant à introduire au processus de transformation un mélange formé de façon homogène selon recette connue, à réchauffer le mélange en vue de son moussage est à le refroidir ensuite,
**caractérisé en ce que**,
- lors d'une première étape, un mélange brut (1) est prélevé dans un récipient mélangeur (2) pour être appliqué, par l'intermédiaire d'un mécanisme d'alimentation (3) avec balais d'alimentation homogène, sur une bande de mat de fibres de verre (4) et/ou un segment de mat de fibres de verre (4) qui a été disposé préalablement sur une chaîne roulante à maillons, le mélange brut (1) étant appliqué par segments (5) sous forme de blocs bruts et/ou plaques brutes, sur toute la largeur de la bande de mat de fibres de verre (4) et/ou du segment de mat de fibres de verre (4) et la hauteur à laquelle le mélange brut est appliqué étant ajustée par l'intermédiaire d'une racle (6),
- **en ce que**, lors d'une deuxième étape, les segments situés sur la bande de mat de fibres de verre (4) et/ou le segment de mat de fibres de verre (4) arrivent au four de moussage (7) et traversent différentes zones de chauffe (8), les segments (5) traversant successivement une zone d'entrée (8a) et au moins une zone de moussage (8b),
- **en ce que**, lors d'une troisième étape, un pré-refroidissement intervient à la sortie du four de moussage (7) dans une zone de stabilisation (9), et les segments sortants (5) sont mis en position verticale sur un chariot transversal (10) par un dispositif de redressement (20) pour les introduire dans un four à recuire (11), le dispositif de redressement (20) s'accrochant à la surface des segments (5) et/ou saisissant les segments (5) pour les positionner sur les chariots transversaux (10).

2. Procédé suivant l'une des revendications précédentes,
**caractérisé en ce que**,
lors d'une quatrième étape, à la sortie du four à recuire (11), les segments (5) sont remis à leur position horizontale et placés sur un convoyeur (12) et emmenés à un poste de traitement ultérieur (13) par découpe et/ou fraisage aux dispositifs en principe connus, le traitement ultérieur (13) pouvant être horizontale, verticale et/ou mise en forme tridimensionnelle quelconque.

3. Procédé suivant l'une des revendications précédentes,
**caractérisé en ce que**,
lors d'une cinquième étape, les segments mis en forme (5) sont empilés sur des palettes et/ou sur des postes de stockage par un dispositif d'empilage et emballés et protégé par un film étirable.

4. Procédé suivant l'une des revendications précédentes,
**caractérisé en ce que**,
lors de la cinquième étape, les bords des segments (5) sont protégés en plus par des pièces de renforcement des bords.

5. Procédé suivant l'une des revendications précédentes,
**caractérisé en ce que**
les segments (5) sont formés par la suspension de l'application du mélange brut (1) et la montée et la descente de la racle (6) lors de la première étape.

6. Procédé suivant l'une des revendications précédentes,
**caractérisé en ce qu'**un élément de vibration (14) disposé sur la racle (6) intervient lors de la première étape.

7. Procédé suivant l'une des revendications précédentes,
**caractérisé en ce que**
les segments (5) sont mis côte à côte en parallèle pour être introduits dans le four à recuire (11) lors de la troisième étape.

8. Procédé suivant l'une des revendications précédentes,
**caractérisé en ce que**
le refroidissement ayant lieu dans le four à recuire (11) lors de la troisième étape se fait de manière définie sans tension.

9. Procédé suivant l'une des revendications précédentes,
**caractérisé en ce que** la bande de mat de fibres de verre (4) et/ou le segment de mat de fibres de verre (4) reste sur la face inférieure des segments (5) ou de la bande sans fin (22) et c'est au cours de la troisième étape que la bande de mat de fibres de verre (4) est coupée en deux entre les différents segments (5).

10. Mécanisme d'alimentation destiné à l'alimentation du matériau pour la fabrication du verre cellulaire,
**caractérisé en ce qu'**une racle (6) sous forme d'un volet et/ou d'un peigne est disposée avec un élément de vibration (14) au bout du mécanisme d'alimentation (3) en direction de travail d'une chaîne à maillons dotée d'un mat de fibres de verre.

11. Mécanisme d'alimentation suivant la revendication 10,
**caractérisé en ce que**
la racle (6) est dotée d'un dispositif d'ajustage de la hauteur et/ou d'un dispositif d'ajustage de l'inclinaison, les dispositifs d'ajustage étant pourvus de pièces de commande.

12. Four de moussage pour la fabrication de verre cellulaire,
**caractérisé en ce qu'**il comprend
une chambre de combustion (15) à la section transversale essentiellement rectangulaire, sous forme d'un capot intérieur doté d'une extrémité inférieure ouverte, et que des tubes de brûlage (16) et/ou buses de brûlage (16) sont disposés sur au moins l'un des côtés longitudinaux verticaux et font saillie dans la chambre de combustion, lesdits tubes de brûlage (16) et/ou buses de brûlage (16) étant pourvus d'une ouverture de décharge biseautée, courbée et/ou coudée à l'orientation vers l'extrémité supérieure, et le brûleur (17) étant disposé à l'intérieur et/ou à l'extérieur du four de moussage (7) et qu'une ouverture située au centre de l'extrémité supérieure mène à un canal d'écoulement (19) qui entoure la chambre de combustion (15), au-dessus de l'ouverture étant disposé un convertisseur (18) sous forme d'une roue à ailettes et/ou d'une roue à aubes et le canal d'écoulement (19) comprenant des ouvertures (21) sous forme de branchies qui mènent, sur les côtés, à l'intérieur du four de moussage (7) et que le canal d'écoulement (19) étant entouré de tous côté d'une paroi de limitation et d'isolation du four de moussage (7) et que la chambre de combustion (15) étant limitée à la surface inférieure par une bande de mat de fibres de verre (4).

13. Four de moussage selon la revendication 12
**caractérisé en ce que**
la bande de mat de fibres de verre (4) peut être introduite par l'intermédiaire d'une chaîne à maillons le long du mécanisme d'alimentation (3) et/ou dans le four de moussage (7).

14. Dispositif visant le transport de blocs de verre cellulaire lors de la fabrication du verre cellulaire
**caractérisé en ce que**
des éléments de préhension sous forme de bandes hérisson et/ou de robots sont disposés sur un dispositif de redressement (20) à la sortie d'une zone de stabilisation (9) et d'une chaîne à maillons avec mat de fibres de verre.
